# EUROPÄISCHE PATENTSCHRIFT

(11) **EP 1 436 073 B1**
(45) Veröffentlichungstag und Bekanntmachung des Hinweises auf die Patenterteilung: **22.08.2007**
(21) Anmeldenummer: 02787488.2
(22) Anmeldetag: 16.10.2002
(51) Int. Cl.: B01F 7/04, B01F 15/00, B29B 7/18

(54) **MISCHKNETER**
KNEADER
MELANGEUR

(30) Priorität: 18.10.2001 DE 10150900
(43) Veröffentlichungstag der Anmeldung: 14.07.2004
(73) Patentinhaber: LIST AG, 4422 Arisdorf (CH)
(72) Erfinder: KUNZ, Alfred, CH-4108 Witterswil (CH); ARNAUD, Daniel, 68560 Hirsingue (FR)
(74) Vertreter: Weiss, Peter
(86) Internationale Anmeldenummer: PCT/EP2002/011578
(87) Internationale Veröffentlichungsnummer: WO 2003/035235

(56) Entgegenhaltungen:
- EP-A- 0 517 068
- EP-A- 1 101 525
- WO-A-88/04198
- DE-A- 19 940 521

## Beschreibung

Die Erfindung betrifft einen Mischkneter zur Durchführung von mechanischen, chemischen und/oder thermischen Prozessen mit mindestens zwei achsparallel rotierenden Wellen in einem Gehäuse mit einer Innenwandung, wobei sich auf den Wellen in Drehrichtung und in Achsrichtung der Wellen aufeinanderfolgende, entlang der Innenwandung des Gehäuses und in Richtung der Wellen bzw. schräg dazu verlaufende Knetbarren an einem Tragelement befinden, wobei sich die Bahnen der Knetbarren an den beiden Wellen zumindest teilweise überlappen und beim Drehen die Knetbarren an der einen Welle zwischen die Tragelemente an der anderen Welle greifen.

Derartige Mischkneter dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, Wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxydantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkten, Abfallprodukten und Zellulosederivaten.

In Mischknetern kann ein Entgasen und/oder Devolatilisieren stattfinden. Angewendet wird dies auf Polymerschmelzen, auf Spinnlösungen für synthetische Fasern und auf Polymer- oder Elastomergranulate bzw -pulver im festen Zustand.

In einem Mischkneter kann eine Polykondensationsreaktion, meist kontinuierlich und meist in der Schmelze, stattfinden und wird vor allem verwendet bei der Behandlung von Polyamiden, Polyestern, Polyacetaten, Polyimiden, Thermoplasten, Elastomeren, Silikonen, Harnstoffharzen, Phenolharze, Detergentien und Düngemitteln.

Stattfinden kann auch eine Polymerisationsreaktion, ebenfalls meist kontinuierlich. Dies wird angewendet auf Polyakrylate, Hydrogele, Polyole, thermoplastische Polymere, Elastomere, syndiotaktisches Polystyrol und Polyacrylamide.

Ganz allgemein können im Mischkneter Reaktionen fest-/flüssig und mehrphasige Reaktionen stattfinden. Dies gilt vor allem für Backreaktionen, bei der Behandlung von Flusssäure, Stearaten, Zyanaten, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig-/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State- Nachkondensation findet bei der Herstellung bzw. Behandlung von Polyester und Polyamiden statt, ein kontinuierliches Anmischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Coagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/Desublimation stattfinden, wodurch chemische Vorprodukte, z.B. Anthrachinon, Metallchloride, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Ein Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen Belastungen der Mischbarren und der Wellen. Diese Kraftspitzen treten insbesondere beim Eingriff der Mischbarren in denjenigen Zonen auf, wo das Produkt schlecht ausweichen kann. Solche Zonen sind z.B. dort gegeben, wo die Scheibenelemente auf der Welle aufgesetzt sind.

Ferner ist aus der DE 199 40 521 A1 ein Mischkneter der o.g. Art bekannt, bei welchem die Tragelemente im Bereich der Knetbarren eine Ausnehmung ausbilden, damit der Knetbarren eine möglichst grosse axiale Erstreckung aufweist. Ein derartiger Mischkneter hat eine hervorragende Selbstreinigung aller produktberührten Flächen des Gehäuses und der Wellen, hat aber die Eigenschaft, dass die Tragelemente der Knetbarren aufgrund der Bahnen der Knetbarren Ausnehmungen erforderlich machen, die zu komplizierten Tragelementformen führen. Daraus resultiert zum einen ein aufwendiges Herstellungsverfahren und zum zweiten bei einer mechanischen Beanspruchung lokale Spannungsspitzen an der Welle und den Tragelementen. Diese Spannungsspitzen, welche hauptsächlich bei den scharfkantigen Ausnehmungen und Dickenänderungen, insbesondere im Bereich, wo die Tragelemente auf den Wellenkern aufgeschweisst sind, auftreten, sind Auslöser für Risse in der Welle und den Tragelementen aufgrund von Materialermüdung.

Der vorliegenden Erfindung liegt die Aufgabe zugrunde, den o.g. Mischkneter dahingehend zu optimieren, dass insbesondere die Spannungsspitzen, welche auf Welle und Tragelemente wirken, abgebaut werden.

Zur Lösung dieser Aufgabe führt, dass auf der Welle in Drehrichtung auf und/oder an einer radialen Ebene aufeinanderfolgend unterschiedlich dicke Tragelemente angeordnet sind.

Damit weist nun ein Tragelement nicht mehr, in Drehrichtung gesehen, eine unterschiedliche Dicke auf, sondern behält seine Dicke bei. Durch diese einfache Form können gefährliche Spannungsspitzen aufgrund der Vermeidung von plötzlichen Materialdickenänderungen und scharfkantigen Übergängen wesentlich reduziert werden. Damit lassen sich die Wellendrehmomente wesentlich erhöhen, ohne dass es zu Wellenbeschädigungen kommt.

Ausserdem schützen die dicken Tragelemente, die von Natur aus eine wesentlich bessere mechanische Stabilität aufweisen, die dünnen Tragelemente, die ihnen in Drehrichtung nachfolgen. Die dicken Tragelemente räumen den Weg für die dünnen Tragelemente frei.

Bevorzugt liegen die dicken Tragelemente mit ihrer Mittellinie auf der radialen Ebene. Die dünneren Tragelemente liegen dagegen mit einer ihrer Seitenflächen der radialen Ebene an und zwar bevorzugt ein dünneres Tragelement, welches dem dickeren Tragelement vorläuft mit der einen Seitenfläche, dagegen das andere dünnere Tragelement, welches auf das dickere Tragelement folgt mit der anderen Seitenfläche. Damit sind die dünneren Tragelemente nicht nur gegenüber den dickeren Tragelementen versetzt angeordnet, sondern sie sind auch gegeneinander versetzt.

In einem bevorzugten Ausführungsbeispiel ist das dickere Tragelement mindestens doppelt so dick wie ein dünnes Tragelement. Das bedeutet wiederum, dass bei dem oben beschriebenen Versatz jeweils die Aussenflächen der dünneren Tragelemente in der Ebene der Aussenflächen der dickeren Tragelemente liegen. Auch hierdurch wird die Beanspruchung der dünneren Tragelemente nochmals herabgesetzt.

Bevorzugt sind die Tragelemente segmentartig ausgebildet, so dass zwischen ihnen Freiräume gebildet werden, durch welche das Produkt in axialer Richtung des Mischkneters bewegt werden kann.

Bevorzugt sind die Tragelemente heiz- und/oder kühlbar ausgestaltet, wobei sie mit einem entsprechenden Heiz- bzw. Kühlmedium versorgt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen erfindungsgemässen Mischkneter mit einem teilweise aufgeschnittenen Gehäuse;
Figur 2 einen Querschnitt durch eine Welle eines Mischkneters mit Trag- und Knetelementen;
Figur 3 einen Schnitt durch die Welle gemäss Figur 2 entlang Linie III-III;
Figur 4 eine Abwicklung der Welle des Mischkneters gemäss Figur 2 mit einer Reihe von Trag- und Knetelementen an der Welle.

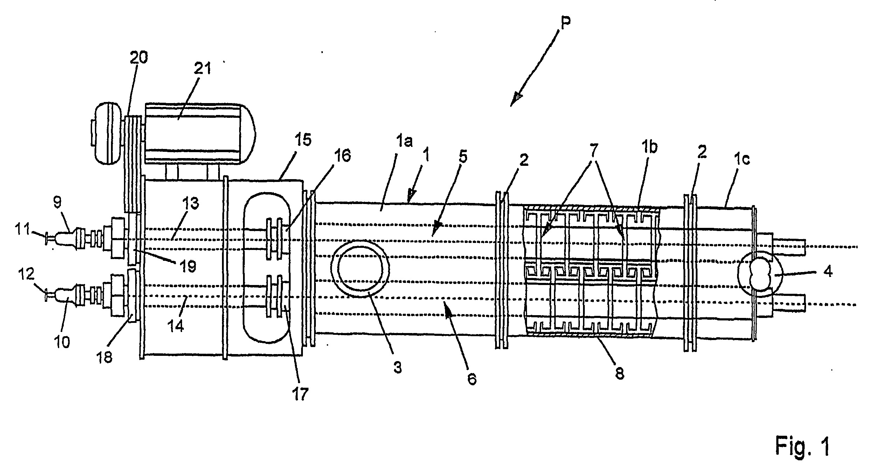

Ein Mischkneter P weist gemäss Figur 1 ein Gehäuse auf, welches aus mehreren Gehäuseabschnitten 1a, 1b und 1 c bestehen kann. Die Gehäuseabschnitte sind miteinander durch entsprechende Flanschverbindungen 2 gekoppelt. Im Gehäuseabschnitt 1a ist ein Aufgabestutzen 3 für ein in dem Mischkneter zu behandelndes Produkt und in dem Gehäuseabschnitt 1c ein Auslassstutzen 4 für das behandelnde Produkt vorgesehen.

Das Produkt wird vom Aufgabestutzen 3 zum Auslassstutzen 4 mittels zweier Wellen 5 und 6 sowie daran angeordneten Knet- und Transportelementen 7 transportiert. Während des Transportes findet eine Mischung und Knetung des Produktes sowie bevorzugt eine thermische Behandlung statt. Hierzu sind die Wellen 5 und 6 und ggf. auch die Knet- und Transportelemente 7 sowie, nicht näher gezeigt, die Gehäusewandung 8 beheizt. Zum Einbringen eines Heizmediums in die Wellen 5 und 6 und von dort ggf. in das Innere der Knet- und Transportelemente 7 sind Anschlüsse 9 und 10 um entsprechende Einlass- und Auslassstutzen 11 und 12 für das durch die Wellen 5 und 6 geführte Heizmedium angeordnet. Eine entsprechende Führung des Heizmediums in Mantelflächen der Wellen 5 und 6 und eine entsprechende Rückführung durch den Auslassstutzen 12 sind Stand der Technik und werden deshalb nicht weiter beschrieben.

Zwischen den Anschlüssen 9 und 10 durchgreifen mit den Wellen 5 und 6 verbundene Wellenzapfen 13 und 14 eine Laterne 15, wobei gegen das Gehäuse 1 jeweils eine Stopfbüchse 16 und 17 zur Abdichtung der Welle 5 bzw. 6 vorgesehen ist. Die Wellenzapfen 13 und 14 sind ausserhalb der Laterne über ein entsprechendes Synchronisationsgetriebe mit den Zahnrädern 18 und 19 miteinander gekoppelt, wobei das Synchronisationsgetriebe über einen Riementrieb 20 mit einem Antrieb 21 verbunden ist. Über diesen Antrieb 21 und den Riementrieb 20 werden die Zahnräder 18 und 19 in Drehbewegung versetzt, welche auf die Welle 5 bzw. 6 übertragen werden. Eine Übertragung dieser Drehbewegung auf die Wellen 5 und 6 erfolgt gleichsinnig mit gleicher Drehzahl. Entsprechende Synchronisationsgetriebe sind Stand der Technik und sollen hier nicht näher beschrieben sein.

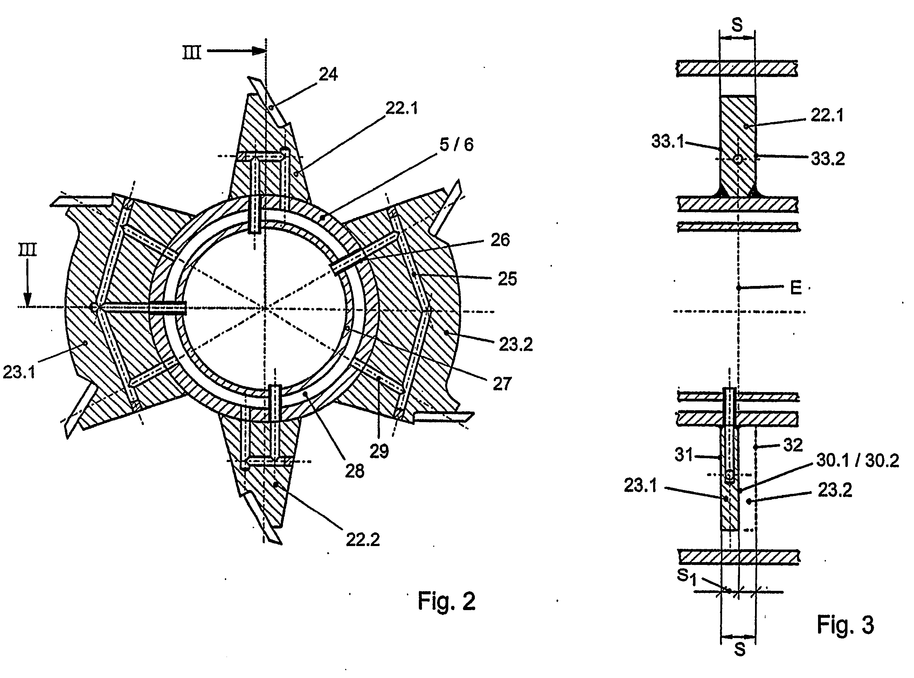

Gemäss Figur 2 sitzen auf der Welle 5/6 Tragelemente 22.1 und 22.2 sowie 23.1 und 23.2 auf, an deren Peripherie jeweils zumindest ein Knetbarren 24 befestigt ist.

Jedes Tragelement soll bevorzugt kühl- bzw. heizbar sein. Hierzu sind in dem jeweiligen Tragelement Bohrungen 25 vorgesehen, welche über Rohrverbindungen 26 mit dem Inneren eines Innenrohres 27 in Verbindung stehen.

Der Heiz-/Kühlmediumzulauf erfolgt durch einen Ringspalt 28 zwischen Innenrohr 27 und Welle 5/6, sowie durch Radialbohrungen 29 zu den Bohrungen 25 hin. Der Rücklauf erfolgt dann über die Rohrverbindung 26 zurück in das Innere des Innenrohres 27.

Erfindungsgemäss sind die Tragelemente unterschiedlich dick ausgebildet. Gemäss Figur 3 besitzen die dickeren Tragelemente 22.1/22.2 eine Dicke s, die mindestens doppelt so dick ist, wie die Dicke s₁ eines dünnen Tragelementes 23.1/23.2. Das Tragelement 23.2 ist nur strichpunktiert dargestellt.

Ebenfalls strichpunktiert dargestellt ist eine radiale Ebene E, welche auch eine Mittellinie für die dickeren Tragelemente 22.1 bzw. 22.2 _bildet. Dagegen liegen die dünneren Tragelemente 23.1 bzw. 23.2 mit jeweils einer ihrer Seitenflächen 30.1/30.2 dieser radialen Ebene E an. Da die dünneren Tragelemente 23.1 und 23.2 nur halb so dick ausgebildet sind, wie die dickeren Tragelemente 22.1 und 22.2, liegen die jeweils äusseren Seitenflächen 31 und 32 in etwa in der Ebene der äusseren Seitenflächen 33.1 und 33.2 des dickeren Tragelementes 22.1 bzw. 22.2.

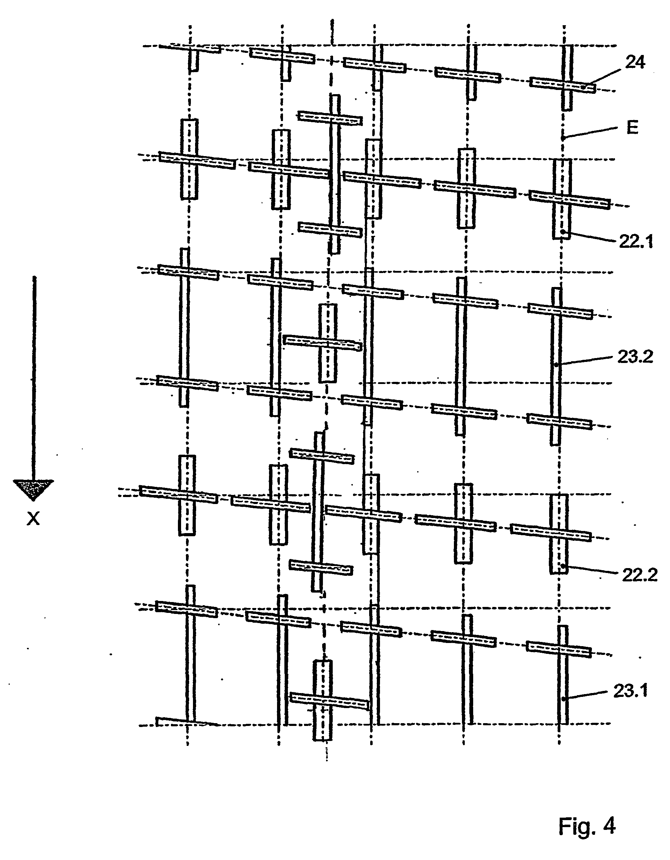

In Figur 4 ist beispielhaft die Anordnung der Knetbarren 24 und der Tragelemente 22.1, 22.2 und 23.1, 23.2 abgewickelt dargestellt. Dabei ist erkennbar, dass die dickeren Tragelemente in der radialen Ebene E bei Drehung der Welle in Drehrichtung x die dünneren Tragelemente 23.1 bzw. 23.2 quasi schützen, indem sie ihnen den Weg freiräumen. Desweiteren ist aber auch erkennbar, dass die Knetbarren 24 von in axialer Richtung benachbarten Kränzen von Knet- und Transportelementen so angeordnet sind, dass sie zwar von den Tragelementen der anderen Welle durchstriffen werden können, gleichzeitig aber jeweils in axialer Richtung so versetzt angeordnet sind, dass es auf der Innenwandung des Gehäuses des Mischkneters keine Spur gibt, die nicht von Knetbarren 24 abgereinigt wird.

In Figur 4 ist auch eine Abwicklung von Tragelementen mit Knetbarren der anderen Welle beim Eingriff in die Tragelemente bzw. Knetbarren der einen Welle gezeigt. Um die dickeren Tragelemente durchzulassen, ist selbstverständlich der Abstand zwischen zwei Knetbarren grösser gewählt, als in dem Fall, in dem dünnere Tragelemente durchgelassen werden müssen. Ferner ist auch hier der axiale Versatz eines dünneren Tragelementes gegenüber einem dickeren Tragelement und einem nachfolgenden dünneren Tragelement erkennbar.

**Positionszahlenliste**

| | | | | | |
|---|---|---|---|---|---|
| 1 | Gehäuseabschnitt | 34 | | 67 | |
| 2 | Flanschverbind. | 35 | | 68 | |
| 3 | Aufgabestutzen | 36 | | 69 | |
| 4 | Auslassstutzen | 37 | | 70 | |
| 5 | Welle | 38 | | 71 | |
| 6 | Welle | 39 | | 72 | |
| 7 | Knet- u. Transp.ele. | 40 | | 73 | |
| 8 | Gehäusewandung | 41 | | 74 | |
| 9 | Anschluss | 42 | | 75 | |
| 10 | Anschluss | 43 | | 76 | |
| 11 | Einlassstutzen | 44 | | 77 | |
| 12 | Auslassstutzen | 45 | | 78 | |
| 13 | Wellenzapfen | 46 | | 79 | |
| 14 | Wellenzapfen | 47 | | | |
| 15 | Laterne | 48 | | | |
| 16 | Stopfbüchse | 49 | | | |
| 17 | Stopfbüchse | 50 | | | |
| 18 | Zahnrad | 51 | | E | radiale Ebene |
| 19 | Zahnrad | 52 | | | |
| 20 | Riementrieb | 53 | | | |
| 21 | Antrieb | 54 | | P | Mischkneter |
| 22 | Tragelem. dick | 55 | | | |
| 23 | Tragelem. dünn | 56 | | | |
| 24 | Knetbarren | 57 | | s | Dicke |
| 25 | Bohrung | 58 | | | |
| 26 | Rohrverbindung | 59 | | X | Drehrichtung |
| 27 | Innenrohr | 60 | | | |
| 28 | Ringspalt | 61 | | | |
| 29 | Radialbohrung | 62 | | | |
| 30 | Seitenfläche | 63 | | | |
| 31 | äussere Seitenfl. | 64 | | | |
| 32 | äussere Seitenfl. | 65 | | | |
| 33 | Seitenfläche | 66 | | | |

## Patentansprüche

1. Mischkneter zur Durchführung von mechanischen, chemischen und/oder thermischen Prozessen mit mindestens zwei achsparallel rotierenden Wellen (5, 6) in einem Gehäuse mit einer Innenwandung (31), befinden sich auf den Wellen (5, 6) in Drehrichtung und in Achsrichtung der Wellen (5, 6) aufeinanderfolgende, entlang der Innenwandung (31) des Gehäuses und in Richtung der Wellen (5, 6) bzw. schräg dazu verlaufende Knetbarren (24) an einem Tragelement (22.1, 22.2, 23.1, 23.2) befinden, wobei sich die Bahnen der Knetbarren (24) an den beiden Wellen (5, 6) zumindest teilweise überlappen und beim Drehen die Knetbarren (24) an der einen Welle zwischen die Tragelemente (22.1, 22.2, 23.1, 23.2) an der anderen Welle greifen,
**dadurch gekennzeichnet,**
**dass** auf der Welle (5, 6) in Drehrichtung (X) auf und/oder an einer radialen Ebene (E) aufeinanderfolgend unterschiedlich dicke Tragelemente (22.1, 22.2 bzw. 23.1, 23.2) angeordnet sind.

2. Mischkneter nach Anspruch 1, **dadurch gekennzeichnet, dass** die dickeren Tragelemente (22.1, 22.2) mit ihrer Mittellinie auf der radialen Ebene (E) liegen.

3. Mischkneter nach Anspruch 1 oder 2, **dadurch gekennzeichnet, dass** die dünneren Tragelemente (23.1, 23.2) mit einer ihrer Seitenflächen (30.1, 30.2) an der radialen Ebene (E) anliegen.

4. Mischkneter nach Anspruch 3, **dadurch gekennzeichnet, dass** in Drehrichtung (X) einem dickeren Tragelement (22.1 bzw. 22.2) ein dünneres Tragelement (23.1 bzw. 23.2) vorwegläuft, dessen eine Seitenfläche (30.1 bzw. 30.2) von der einen axialen Richtung her an der radialen Ebene (E) anliegt, während ein dünneres Tragelement (23.2 bzw. 23.1) nachfolgt, welches von der anderen Richtung her mit einer Seitenfläche (30.2 bzw. 30.1) an der radialen Ebene (E) anliegt.

5. Mischkneter nach wenigstens einem der Ansprüche 1 bis 4, **dadurch gekennzeichnet dass** das dickere Tragelement (22.1, 22.2) mindestens doppelt so dick ist, wie das dünnere Tragelement (23.1, 23.2).

6. Mischkneter nach wenigstens einem der Ansprüche 1 bis 5, **dadurch gekennzeichnet, dass** das dünnere Tragelement (23.1, 23.2) in Drehrichtung (X) länger ausgebildet ist, als das dickere Tragelement (22.1, 22.2).

7. Mischkneter nach wenigstens einem der Ansprüche 1 bis 6, **dadurch gekennzeichnet, dass** die Tragelemente (22.1, 22.2, 23.1, 23.2) segmentartig ausgebildet sind.

8. Mischkneter nach wenigstens einem der Ansprüche 1 bis 7, **dadurch gekennzeichnet, dass** die Tragelemente (22.1, 22.2, 23.1, 23.2) heiz- und/oder kühlbar ausgestaltet sind.

## Claims

1. Mixer-kneader for carrying out mechanical, chemical and/or thermal processes, comprising at least two paraxially rotating shafts (5, 6) in a housing having an inner wall (31), wherein kneading bars (24), which are disposed successively on the shafts (5, 6) in direction of rotation and in axial direction of the shafts (5, 6) and extend along the inner wall (31) of the housing and in the direction of the shafts (5, 6) and/or obliquely thereto, are situated on a carrier element (22.1, 22.2, 23.1, 23.2), wherein the paths of the kneading bars (24) on the two shafts (5, 6) at least partially overlap and during rotation the kneading bars (24) on the one shaft engage between the carrier elements (22.1, 22.2, 23.1, 23.2) on the other shaft,
**characterized in**
**that** carrier elements (22.1, 22.2 and/or 23.1, 23.2) of differing thickness are disposed successively on the shaft (5, 6) in direction of rotation (X) on and/or against a radial plane (E).

2. Mixer-kneader according to claim 1, **characterized in that** the thicker carrier elements (22.1, 22.2) lie with their centre line on the radial plane (E).

3. Mixer-kneader according to claim 1 or 2, **characterized in that** the thinner carrier elements (23.1, 23.2) lie with one of their side faces (30.1, 30.2) against the radial plane (E).

4. Mixer-kneader according to claim 3, **characterized in that** in direction of rotation (X) a thicker carrier element (22.1 and/or 22.2) is preceded by a thinner carrier element (23.1 and/or 23.2), one side face (30.1 and/or 30.2) of which lies from the one axial direction against the radial plane (E), and succeeded by a thinner carrier element (23.2 and/or 23.1), which lies from the other direction with a side face (30.2 and/or 30.1) against the radial plane (E).

5. Mixer-kneader according to at least one of claims 1 to 4, **characterized in that** the thicker carrier element (22.1, 22.2) is at least twice as thick as the thinner carrier element (23.1, 23.2).

6. Mixer-kneader according to at least one of claims 1 to 5, **characterized in that** the thinner carrier element (23.1, 23.2) is designed longer in direction of rotation (X) than the thicker carrier element (22.1, 22.2).

7. Mixer-kneader according to at least one of claims 1 to 6, **characterized in that** the carrier elements (22.1, 22.2, 23.1, 23.2) are of a segment-like design.

8. Mixer-kneader according to at least one of claims 1 to 7, **characterized in that** the carrier elements (22.1, 22.2, 23.1, 23.2) are designed to be heatable and/or coolable.

## Revendications

1. Mélangeur-pétrisseur destiné à réaliser des processus mécaniques, chimiques et/ou thermiques, avec au moins deux arbres à rotation parallèle à l'axe (5, 6) dans un boîtier avec une paroi intérieure (31), sur les arbres (5, 6) se trouvant, sur un élément de support (22,1, 22,2, 23.1, 23.2), des barres de pétrissage (24) successives dans le sens de rotation et dans le sens de l'axe des arbres (5, 6), s'étendant le long de la paroi intérieure (31) du boîtier et dans la direction des arbres (5, 6) ou en oblique par rapport à ces derniers, les trajectoires des barres de pétrissage (24) aux deux arbres (5, 6) se recouvrant au moins partiellement et les barres de pétrissage (24) à l'un des arbres s'engageant, lors de la rotation, entre les éléments de support (22,1, 22,2, 23.1, 23.2) à l'autre arbre,
**caractérisé par** le fait,
sur l'arbre (5, 6) sont disposés, dans le sens de rotation (X), sur et/ou à un plan radial (E), des éléments de support (22,1, 22,2 ou 23.1, 23.2) successifs d'épaisseur différente.

2. Mélangeur-pétrisseur selon la revendication 1, **caractérisé par le fait que** les éléments de support épais (22,1, 22.2) se trouvent, par leur ligne médiane, sur le plan radial (E).

3. Mélangeur-pétrisseur selon la revendication 1 ou 2, **caractérisé par le fait que** les éléments de support minces (23.1, 23.2) se trouvent, par l'une de leurs faces latérales (30.1, 30.2) contre le plan radial (E).

4. Mélangeur-pétrisseur selon la revendication 3, **caractérisé par le fait que**, dans le sens de rotation (X), un élément de support épais (22.1 ou 22.2) est précédé d'un élément de support mince (23.1 ou 23.2) dont une face latérale (30.1 ou 30.2) se trouve, de l'une des directions axiales, contre le plan radial (E), tandis qu'il est suivi d'un élément de support mince (23.2 ou 23.1) qui, de l'autre direction, se trouve, par une face latérale (30.2 ou 30.1) contre le plan radial (E).

5. Mélangeur-pétrisseur selon au moins l'une des revendications 1 à 4, **caractérisé par le fait que** l'élément de support épais (22.1, 22.2) est au moins deux fois plus épais que l'élément de support mince (23.1, 23.3).

6. Mélangeur-pétrisseur selon au moins l'une des revendications 1 à 5, **caractérisé par le fait que** l'élément de support mince (23.1, 23.2) est, dans le sens de rotation (X), réalisé plus long que l'élément de support épais (22.1, 22.2).

7. Mélangeur-pétrisseur selon au moins l'une des revendications 1 à 6, **caractérisé par le fait que** les éléments de support (22.1, 22.2, 23.1, 23.2) sont réalisés en forme de segments.

8. Mélangeur-pétrisseur selon au moins l'une des revendications 1 à 7, **caractérisé par le fait que** les éléments de support (22.1, 22.2, 23.1, 23.2) sont réalisés de manière à pouvoir être chauffés et/ou refroidis.
